# EUROPEAN PATENT SPECIFICATION

(11) **EP 0 987 863 B1**
(45) Date of publication and mention of the grant of the patent: **06.04.2005**
(21) Application number: 98117678.7
(22) Date of filing: 17.09.1998
(51) Int. Cl.: H04L 27/233, H04L 27/227

(54) **Soft decision method and apparatus for 8PSK demodulation**
Weichentscheidungsverfahren und -Vorrichtung bei einer 8PSK Demodulation
Méthode et dispositif à décision douce pour demodulation 8PSK

(43) Date of publication of application: 22.03.2000
(73) Proprietor: Sony International (Europe) GmbH, 10785 Berlin (DE)
(72) Inventor: Böhnke, Ralf, c/o Sony International (Eur) GmbH, 70736 Fellbach (DE); Dölle, Thomas, c/o Sony International (Eur) GmbH, 70736 Fellbach (DE); Konschak, Tino, c/o Sony International (Eur) GmbH, 70736 Fellbach (DE)
(74) Representative: Rupp, Christian, Dipl.Phys.

(56) References cited:
- EP-A- 0 519 891
- US-A- 4 250 458
- BUDA FABIEN ; FANG JUING ; SEHIER PHILIPPE: "Soft decoding of BCH codes applied to multilevel modulation codes for Rayleigh fading channels" IEEE MILITARY COMMUNICATIONS CONFERENCE MILCOM, vol. 1, 2 - 5 November 1997, pages 32-36, XP002093340 Monterey, CA, USA

## Description

The present invention relates to a method for demodulating a 8 PSK modulated signal, a demodulator for demodulating a 8 PSK modulated signal as well as to a mobile communications device comprising such a demodulator.

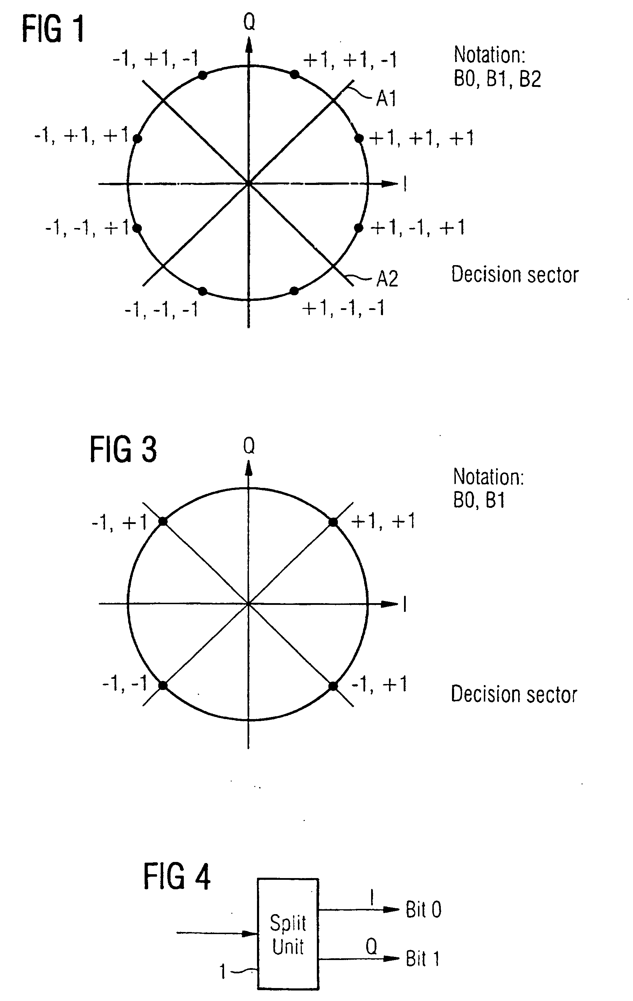

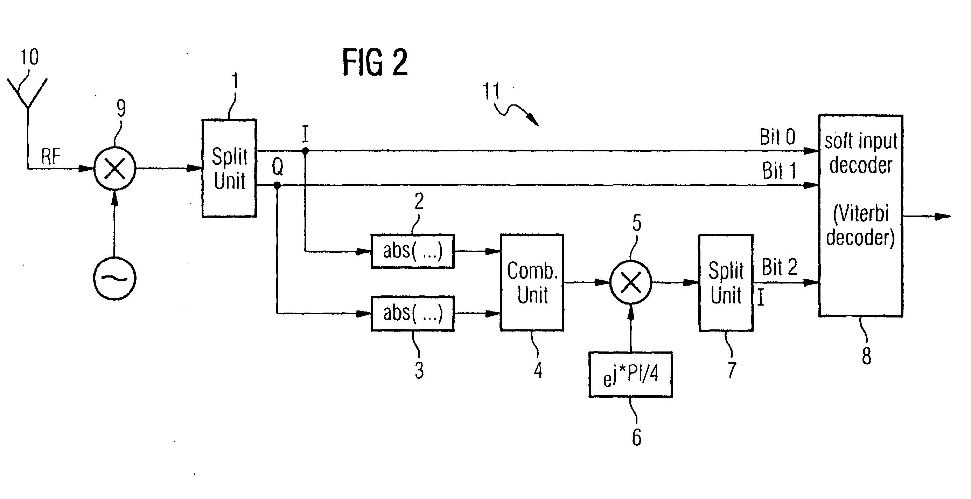

When demodulating a 4-PSK (QPSK) modulated signal it is known to generate soft information besides the hard decision information. As the inphase and quadrature phase component can be separated easily in the QPSK system (orthogonal signal space) it is quite simple to generate the soft information representing the likelihood of the received symbol. Fig. 3 shows the modulation point constellation scheme according to the QPSK scheme. As shown in fig. 4, split unit one separates the inphase component to generate a bit 0 and a Q-phase component to generate the bit one. Furthermore a third bit is issued representing the soft information, i.e. the likelihood of the received symbol.

However, when demodulating a 8 PSK modulated signal, the soft information generation process as known from the QPSK modulation scheme can no longer be used as there is no longer any orthogonal signal space. Therefore according to the state of the art a typical 8 PSK demodulation process generates only hard decision information. To generate the hard decision information (e.g. + and -1) decision sectors (threshold comparison) is introduced. The hard decision of the received symbol represents the sector in which the received constellation point has been detected. According to the detected sector three bits B0, B1, B2 are generated according to the hard decision. According to this prior art no soft decision information enhancing the quality of the decoding process is generated.

Compared to QPSK(4-PSK) where the I and Q (in-phase and quadrature)components can be separated completely (orthogonal space), the generation of soft information (confidence or likelihood information) in a 8-PSK receiver therefore is more complicated.

From US-A-5757856 a differential encoder and decoder for a Trellis-encoded 8 PSK modulation is known. In fig. 1 of the document an 8 PSK type coded signal constellation is shown and explained.

JT04-123553 discloses a monitor system for octal phase PSK demodulation.

The European Patent Application EP 0 519 891 A2 discloses a modem receiver designed for use in a mobile environment, which includes an adaptive equalizer driven by phase estimation and rotation circuitry, and which is operable in multipath fading channels. The modem uses thus an AFC loop and a phase rotation circuit in front of the adaptive equalizer to improve equalizer performance in the fading channel. It uses PI/4 phase rotation circuitry before a phase quantization decision is made. This PI/4 phase rotation circuitry allows for decisions to be made on a QPSK constellation, rather than on an input 8PSK constellation, thus improving detection performance.

Therefore it is the object of the present invention to provide for a system generating additionally soft decision information when demodulating an 8-PSK modulated signal.

This object is achieved by means of the features of the independent claims. The dependent claims develop further the centrality of the present invention.

According to the present invention therefore a method for demodulating an 8-PSK modulating signal is provided. At first the I and Q components of the received symbol are detected. A first and a second soft or hard decision information value representing the detected I and Q components, respectively, are output. The distance from the received symbol to the closest axis of a coordinate system rotated by 45° relatively to the I and Q coordinate system is detected and a third information value representing the detected distance is output. The third value therefore represents also a soft decision or likelihood information.

The distance from the received symbol to the closest axis of a coordinate system rotated by 45° degrees relatively to the I and Q coordinate system can be measured by mapping the received symbol into the first quadrant of the I and Q coordinate system. Then the mapped constellation point is phase rotated by 45° and the I component of the phase rotated mapped constellation point is taken. The I component of the phase rotated mapped constellation point therefore represents the likelihood or soft decision information.

The mapping of the received symbol in the first quadrant of the I and Q coordinate system can be affected by taking the absolute value of the I and Q components of the received symbol.

The three values generated by a demodulation method according to the present invention, in the case of three soft decision values, can be supplied to a Viterbi decoding step, wherein the third value representing the distance is used as a likelihood information in the Viterbi decoding step. The Viterbi decoding thereby stands as an example for convolutional decoding techniques, which are an example for general soft input decoding techniques.

The third bit can be supplied as an input signal to a carrier phase tracking loop.

The third bit can be supplied as an input signal to an automatic gain control.

Regarding the 8 PSK constellation mapping scheme, a Gray constellation mapping can be used.

According to the present invention furthermore a demodulator for demodulating a 8 PSK demodulated signal is provided. The demodulator comprises a split unit adapted for detecting the I and Q components (separating the I and Q components) of the received symbol, and outputting a first and a second bit representing the detected I and Q components. Furthermore a detector is provided adapted for detecting the distance from the received symbol to the closest axis of a coordinate system rotated by 45° relatively to the I and Q coordinate system and for outputting a third bit representing the measured distance.

The detector for measuring the distance from the received symbol to the closest axis of the coordinate system rotated by 45° relatively to the I and Q coordinate system can comprise means for mapping the received symbol to the first quadrant of the I and Q coordinate system, means for phase rotating the mapped constellation point by 45°, and means taking the I component of the phase rotated mapped constellation point.

The means for mapping the received symbol into the first quadrant of the I and Q coordinate system can comprise means for taking the absolute value of the I and Q components of the received symbol.

Furthermore a Viterbi decoder can be provided, wherein the three bits representing the measure distance are used as a likelihood information in the Viterbi decoder.

A carrier phase tracking loop can be provided to be supplied to the third bit as an input signal.

An automatic gain control can be supplied with a third bit information signal as an input signal.

According to the present invention furthermore a mobile communications device is provided comprising a demodulator as set forth above.

In the following a preferred embodiment of the present invention will be explained with reference to the figures of the enclosed drawings such that further objects, features and advantages provided by the present invention will become clearer.
Fig. 1 shows a 8-PSK modulation point constellation scheme and two coordinate systems, i.e. the I-Q coordinate system as well as the second coordinate system build up from virtual axes and rotated by 45° relatively to the I-Q coordinate system,
fig. 2 shows a block diagram of an embodiment of the present invention, wherein the soft decision information (likelihood information) is input to a Viterbi decoder,
fig. 3 shows a known QPSK constellation scheme, and
fig. 4 shows a splitter unit for separating the I and Q component of a QPSK modulated symbol.

With reference to Fig. 1 the basic idea of the present invention will be explained. In fig. 1 the modulation point constellation scheme of a gray-coded 8-PSK modulation system is shown. Furthermore the I-Q coordinate system as well as a second coordinate system build up of orthogonal axes A1, A2 is shown. The second coordinate system build up from the axes A1, A2 is shifted by 45° relatively to the I-Q coordinate system. By providing a second coordinate system, with other words an orthogonal signal space also for 8-PSK modulation can be generated. For higher order modulation schemes, such as for example 16-PSK modulation, further coordinate systems and virtual axes can be introduced.

According to the present invention firstly the I and Q components of the received symbol are detected and respectively output as a first and a second bit. This information can be used as soft information or it can be decided in which decision sector the received symbol is positioned (hard decision) and only data representing the decided sector is generated and supplied to a decoder.

In another step the received symbols are projected on the axes of the second coordinate system build up from the axes A1, A2 and the distance from the received symbol to the closest axes A1, A2 of said coordinate system is measured. Said measured distance is then output as soft decision or likelihood information and can be used in a convolutional decoder, such as for example a Viterbi decoder.

With reference to fig. 2 an embodiment of the implementation of the present invention will be explained. Fig. 2 shows a demodulator 11 for the demodulation of a 8-PSK modulated signal according to the present invention. The 8-PSK modulated RF signal is received from an antenna 10 and then passed to a baseband down converter 9. The base band converted signal is then split in a splitter unit 1 in the inphase component and quadrature phase component. The splitter unit 1 therefore generates the inphase quadrature phase component of the incoming complex constellation. The inphase information and the quadrature phase information are respectively output as a bit 0 and a bit 1. These two bits 0 and bit 1 are input in a convolutional decoder such as Viterbi decoder 8.

Additionally according to the present invention the received complex symbol constellation is mapped in the first quadrant. Therefore an absolute calculation unit 2 is provided for the inphase component and an absolute value calculation unit 3 is provided for the quadrature phase component. The absolute calculation unit 2, 3 maps all incoming complex symbol constellations to the first quadrant in the complex plane. The implementation of the absolute calculation unit 2, 3 is therefore quite simple. If the incoming symbol value is ≥ 0, no change is required, and if the signal value is < 0, the sign of the symbol is inverted (flipping of the sign bit).

The output signals of the absolute calculation units 2, 3 are input to a combination unit 4. The combination unit 4 uses the two inputs from the absolute calculation unit 2, 3 to generate a complex constellation point in the complex IQ plain. The complex constellation point generated by the combination unit 4 is then rotated by 45° or PI/4 in the complex domain by means of a phase adding unit 6 providing a phase shift of 45° or PI/4 and a multiplier 5. In the implementation therefore one addition and two multiplications have to be effected (as later on only the I-part is used).

The phase rotated mapped symbol is then input to a second splitter unit 7. The second splitter unit 7 takes only the inphase value of the mapped phase shifted symbol to generate a soft information value. Therefore by passing only the inphase component of the received symbol to the output a third bit (bit 2) is generated and can be input to the Viterbi decoder as likelihood information.

The scheme as explained with reference to fig. 1 and 2 is both applicable to coherent 8-PSK modulation and differential 8-PSK modulation. The scheme is furthermore independent of the actual transmission technology (single carrier, multicarrier, ...).

In the following a calculation example will be used to demonstrate the processing effected by the structure shown in figure 2:
The received constellation point is: = 0,72*exp(j*1.1*PI) = -0,685+j(-0.222)
The splitter unit 1 generates the decisions: Bit0=-0.685 (inphase component), Bit1=-0.222 (quadrature component).

After the comb unit 4 the following complex constellation is present: 0.685+j(0.222) = 0.72*ep(j*0.1*PI).

After the (PI/4) rotation unit 5, 6 the signal is: 0.72*exp(j*0.35PI) = 0.327+j*(0.642)

After the second splitter unit 7 (taking the only I part) the decision is for B2 = 0.327 Therefore B2=0.327 is output as soft decision likelihood information bit in this calculation example.

In advanced transmission systems convolutional codes are used. Convolutional decoders (like Viterbi algorithm based decoders) show excellent performance if "soft-information" (likelihood) is available besides the symbol decision itself. Likelihood information expresses the confidence of the decision and is taken into account in the maximum-likelihood decoding process. For Reed-Solomon or in general block codes the likelihood (confidence) information can be used as an indication for erasure and improve the decoding process.

Even if no coding is applied the availability of soft information can be used in the communication system to improve the performance (e.g. as input to a carrier phase tracking loop, input to AGC=automatic gain control).

With the structure according to the present invention soft-information during the demodulation process. The scheme is capable of generating soft-output values which take into account the strength of the received constellation point (power of the received symbol) and the position ("deviation" from the optimum point = middle of the sector).

The advantages and the character of the present invention can be summarized as follows:
- Maximum likelihood information is generated with 8-PSK constellations which improves overall system performances with a simple decoder structure.
- No complicated calculations are needed (like absolute phase calculation).
- The usage of Gray constellation mapping reduced the error events.
- The smaller confidence of "Bit3" (result of the transmitter constellation diagram) is already taken into account in the demodulator structure.
- The structure can be seen as a simple extension of 4-PSK (QPSK) modulation/demodulation schemes and therefore implementation of flexible (soft-information) QPSK/8PSK demodulators is simplified.

## Claims

1. A method for demodulating an 8 PSK modulated signal, comprising the following steps:
- detecting (1) the I and Q components of a received symbol,
- outputting a first and a second soft or hard decision information value representing the detected I and Q components,
- detecting (2, 3, 4, 5, 6, 7) the distance from the received symbol to the closest axis of a coordinate system rotated by 45 degrees relatively to the I and Q coordinate system, and
- outputting a third, soft, decision information value representing the detected distance.

2. A method for demodulating according to claim 1,
**characterized in that**
the distance from the received symbol to the closest axis of a coordinate system rotated by 45 degrees relatively to the I and Q coordinate system is measured by
- mapping (2, 3) the received symbol into the first quadrant of the I and Q coordinate system,
- phase rotating (5, 6) the mapped constellation point by 45 degrees, and
- taking (7) the I component of the phase rotated mapped constellation point.

3. A method for demodulating according to claim 2,
**characterized in that**
the mapping of the received symbol into the first quadrant of the I and Q coordinate system is effected by taking (2, 3) the absolute value of the I and Q components of the received symbol.

4. A method for demodulating according to anyone of the preceding claims,
**characterized by**
the step of supplying the three soft or hard decision information values to a Viterbi decoding step (8).

5. A method for demodulating according to anyone of the preceding claims,
**characterized by**
the step of supplying the third soft decision information value as an input signal to a carrier phase tracking loop.

6. A method for demodulating according to anyone of the preceding claims,
**characterized in that**
a Gray constellation mapping is used.

7. A Demodulator for demodulating an 8 PSK modulated signal,
comprising:
- a splitter unit (1) adapted for detecting the I and Q components of a received symbol and outputting a first and a second soft or hard decision information value representing the detected I and Q components,
- a detector (2, 3, 4, 5, 6, 7) adapted for detecting the distance from the received symbol to the closest axis of a coordinate system rotated by 45 degrees relatively to the I and Q coordinate system and for outputting a third, soft, decision information value representing the detected distance.

8. A demodulator according to claim 7,
**characterized in that**
the detector for measuring the distance from the received symbol to the closest axis of a coordinate system rotated by 45 degrees relatively to the I and Q coordinate system comprises:
- means (2, 3) for mapping the received symbol into the first quadrant of the I and Q coordinate system,
- means (5, 6) for phase rotating the mapped constellation point by 45 degrees, and
- means (7) for taking the I component of the phase rotated mapped constellation point.

9. A demodulator according to claim 8,
**characterized in that**
the means for mapping the received symbol into the first quadrant of the I and Q coordinate system comprises means (2, 3) for taking the absolute value of the I and Q components of the received symbol.

10. A demodulator according to anyone of claims 7 to 9,
**characterized by**
a soft input decoder, like a Viterbi decoder (8), wherein the three soft or hard decision information values representing the measured distance are used as a likelihood information in said soft input decoder (8).

11. A demodulator according to anyone of claims 7 to 10,
**characterized by**
a carrier phase tracking loop supplied with the third soft decision information value as an input signal.

12. A demodulator according to anyone of claims 7 to 11,
**characterized in that**
a Gray constellation mapping is used.

13. A mobile communication device,
**characterized in that**
it comprises a demodulator (11) according to anyone of claims 7 to 12.

## Patentansprüche

1. Verfahren zur Demodulation eines 8-PSK-modulierten Signals, aufweisend die folgenden Schritte:
- Detektieren (1) der I- und Q-Komponente eines empfangenen Symbols,
- Ausgeben eines ersten und eines zweiten Weich- oder Hartentscheidungsinformationswertes, der die detektierte I-und Q-Komponente darstellt,
- Detektieren (2, 3, 4, 5, 6, 7) des Abstandes vom empfangenen Symbol zur nähesten Achse eines um 45 Grad relativ zum I- und Q-Koordinatensystem gedrehten Koordinatensystems, und
- Ausgeben eines dritten, weichen, Entscheidungsinformationswertes, der den detektierten Abstand darstellt.

2. Verfahren zur Demodulation nach Anspruch 1,
**dadurch gekennzeichnet, dass**
der Abstand vom empfangenen Symbol zur nähesten Achse eines um 45 Grad relativ zum I- und Q-Koordinatensystem gedrehten Koordinantensystems gemessen wird durch
- Abbilden (2, 3) des empfangenen Symbols in den ersten Quadranten des I- und Q-Koordinatensystems,
- Phasen-Drehen (5, 6) des abgebildeten Konstellationspunktes um 45 Grad, und
- Nehmen (7) der I-Komponente des Phasen-gedreht abgebildeten Konstellationspunkts.

3. Verfahren zur Demodulation nach Anspruch 2,
**dadurch gekennzeichnet, dass**
die Abbildung des empfangenen Symbols in den ersten Quadranten des I- und Q-Koordinatensystems durch Nehmen (2, 3) des absoluten Wertes der I- und Q-Komponente des empfangenen Symbols bewirkt wird.

4. Verfahren zur Demodulation nach einem der vorhergehenden Ansprüche,
**gekennzeichnet durch**
den Schritt eines Zuführens der drei Weich- oder Hartentscheidungsinformationswerte einem Viterbi-Decodierungsschritt (8).

5. Verfahren zur Demodulation nach einem der vorhergehenden Ansprüche,
**gekennzeichnet durch**
den Schritt eines Zuführens des dritten Weichentscheidungsinformationswerts einer Trägerphasennachführungsschleife als ein Eingangssignal.

6. Verfahren zur Demodulation nach einem der vorhergehenden Ansprüche,
**dadurch gekennzeichnet dass**,
eine Gray-Konstellationsabbildung benutzt wird.

7. Demodulator zur Demodulation eines 8-PSK-modulierten Signals,
aufweisend:
- eine Teilereinheit (1), die zur Detektion der I- und Q-Komponente eines empfangenen Symbols und Ausgabe eines die detektierte I- und Q-Komponente darstellenden ersten und zweiten Weich- oder Hartentscheidungsinformationswerts ausgebildet ist,
- einen Detektor (2, 3,4, 5, 6, 7), der zur Detektion des Abstandes vom empfangenen Symbol zur nähesten Achse eines um 45 Grad relativ zum I- und Q-Koordinatensystem gedrehten Koordinatensystems und Ausgabe eines dritten, weichen, Entscheidungsinformationswerts, der den detektierten Abstand darstellt, ausgebildet ist.

8. Demodulator nach Anspruch 7,
**dadurch gekennzeichnet, dass**
der Detektor zum Messen des Abstandes vom empfangenen Symbol zur nähesten Achse eines um 45 Grad relativ zum I- und Q-Koordinatensystem gedrehten Koordinatensystems aufweist:
- eine Einrichtung (2, 3) zur Abbildung des empfangenen Symbols in den ersten Quadranten des I- und Q-Koordinatensystems,
- eine Einrichtung (5, 6) zur Phasen-Drehung des abgebildeten Konstellationspunktes um 45 Grad, und
- eine Einrichtung (7) zum Nehmen der I-Komponente des Phasen-gedrehten abgebildeten Konstellationspunkts.

9. Demodulator nach Anspruch 8,
**dadurch gekennzeichnet, dass**
die Einrichtung zur Abbildung des empfangenen Symbols in den ersten Quadranten des I- und Q-Koordinatensystems eine Einrichtung (2, 3) zum Nehmen des Absolutwertes der I- und Q-Komponente des empfangenen Symbols aufweist.

10. Demodulator nach einem der Ansprüche 7 bis 9, **gekennzeichnet durch**
einen Weicheingangsdecodierer ähnlich einem Viterbi-Decodierer (8), wobei die drei Weich- oder Hartentscheidungsinformationswerte, die den gemessenen Abstand darstellen, im Weicheingangsdecodierer (8) als eine Wahrscheinlichkeitsinformation benutzt werden.

11. Demodulator nach einem der Ansprüche 7 bis 10, **gekennzeichnet durch**
eine Trägerphasennachführungsschleife, welcher der dritte Weichentscheidungsinformationswert als ein Eingangssignal zugeführt wird.

12. Demodulator nach einem der Ansprüche 7 bis 11,
**dadurch gekennzeichnet, dass**
eine Gray-Konstellationsabbildung benutzt ist.

13. Mobile Kommunikationseinrichtung,
**dadurch gekennzeichnet, dass**
sie einen Demodulator (11) gemäß einem der Ansprüche 7 bis 12 aufweist.

## Revendications

1. Procédé pour démoduler un signal modulé 8 PSK, comprenant les étapes qui suivent :
détection (1) des composantes I et Q d'un symbole reçu ;
émission en sortie de première et seconde valeurs d'information de décision molle ou dure représentant les composantes I et Q ;
détection (2, 3, 4, 5, 6, 7) de la distance depuis le symbole reçu jusqu'à l'axe le plus proche d'un système de coordonnées qui est tourné de 45 degrés par rapport au système de coordonnées I et Q ; et
émission en sortie d'une troisième valeur d'information de décision molle représentant la distance détectée.

2. Procédé de démodulation selon la revendication 1, **caractérisé en ce que** la distance depuis le symbole reçu jusqu'à l'axe le plus proche d'un système de coordonnées qui est tourné de 45 degrés par rapport au système de coordonnées I et Q est mesurée en :
cartographiant (2, 3) le symbole reçu dans le premier quadrant du système de coordonnées I et Q ;
faisant tourner la phase (5, 6) du point de constellation cartographié de 45 degrés ; et en
prenant (7) la composante I du point de constellation cartographié à phase tournée.

3. Procédé de démodulation selon la revendication 2, **caractérisé en ce que** la cartographie du symbole reçu dans le premier quadrant du système de coordonnées I et Q est réalisée en prenant (2, 3) la valeur absolue des composantes I et Q du symbole reçu.

4. Procédé de démodulation selon l'une quelconque des revendications précédentes, **caractérisé par** l'étape d'application des trois valeurs d'information de décision molle ou dure sur une étape de décodage de Viterbi (8).

5. Procédé de démodulation selon l'une quelconque des revendications précédentes, **caractérisé par** l'étape d'application de la troisième valeur d'information de décision molle en tant que signal d'entrée sur une boucle de suivi de phase de porteuse.

6. Procédé de démodulation selon l'une quelconque des revendications précédentes, **caractérisé en ce qu'**une cartographie de constellation de Gray est utilisée.

7. Démodulateur pour démoduler un signal modulé 8 PSK, comprenant :
une unité de séparateur (1) qui est adaptée pour détecter les composantes I et Q d'un symbole reçu et pour émettre en sortie des première et seconde valeurs d'information de décision molle ou dure représentant les composantes I et Q détectées ;
un détecteur (2, 3, 4, 5, 6, 7) qui est adapté pour détecter la distance depuis le symbole reçu jusqu'à l'axe le plus proche d'un système de coordonnées qui est tourné de 45 degrés par rapport au système de coordonnées I et Q et pour émettre en sortie une troisième valeur d'information de décision molle qui représente la distance détectée.

8. Démodulateur selon la revendication 7, **caractérisé en ce que** le détecteur pour mesurer la distance depuis le symbole reçu jusqu'à l'axe le plus proche d'un système de coordonnées qui est tourné de 45 degrés par rapport au système de coordonnées I et Q comprend :
un moyen (2, 3) pour cartographier le symbole reçu dans le premier quadrant du système de coordonnées I et Q ;
un moyen (5, 6) pour faire tourner la phase du point de constellation cartographié de 45 degrés ; et
un moyen (7) pour prendre la composante I du point de constellation cartographié à phase tournée.

9. Démodulateur selon la revendication 8, **caractérisé en ce que** le moyen pour cartographier le symbole reçu dans le premier quadrant du système de coordonnées I et Q comprend un moyen (2, 3) pour prendre la valeur absolue des composantes I et Q du symbole reçu.

10. Démodulateur selon l'une quelconque des revendications 7 à 9, **caractérisé par** un décodeur d'entrée molle, similaire à un décodeur de Viterbi (8), dans lequel les trois valeurs d'information de décision molle ou dure représentant la distance mesurée sont utilisées en tant qu'information de probabilité dans ledit décodeur d'entrée molle (8).

11. Démodulateur selon l'une quelconque des revendications 7 à 10, **caractérisé par** une boucle de suivi de phase de porteuse qui reçoit en application la troisième valeur d'information de décision molle en tant que signal d'entrée.

12. Démodulateur selon l'une quelconque des revendications 7 à 11, **caractérisé en ce qu'**une cartographie de constellation de Gray est utilisée.

13. Dispositif de communication mobile, **caractérisé en ce qu'**il comprend un démodulateur (11) selon l'une quelconque des revendications 7 à 12.
